# EUROPEAN PATENT SPECIFICATION

(11) **EP 0 850 821 B1**
(45) Date of publication and mention of the grant of the patent: **06.03.2002**
(21) Application number: 96309569.0
(22) Date of filing: 31.12.1996
(51) Int. Cl.: B62D 55/24

(54) **Rubber crawler track**
Gummigleiskette
Chenille de caoutchouc

(43) Date of publication of application: 01.07.1998
(73) Proprietor: Bridgestone Corporation, Tokyo (JP)
(72) Inventor: Kumano, Youichi, Yokohama-shi, Kanagawa-ken (JP)
(74) Representative: Whalley, Kevin

(56) References cited:
- EP-A- 0 638 472

## Description

The present invention relates to a rubber crawler track used as a part of the running gear of a construction machine or the like, and more particularly to a more durable rubber crawler track with an improved function of anti-disengagement.

Recently, it has been demanded in this field to prevent disengagement between the rubber crawler track and the track drive wheels, supporting or track rollers. It is now known that such disengagement is caused when the cores are displaced laterally of the rubber crawler track. When an external force is applied laterally to the rubber crawler track, the cores buried in a rubber belt are likely to be displaced out of place laterally of the rubber crawler track because of the rubber elasticity and the idlers or rollers ride onto the cores thus displaced, resulting in a disengagement between the crawler track and idlers or rollers. Such displacement of the cores is limited in extent to within the range of rubber elasticity but it is actually derived from the elasticity of the rubber belt itself.

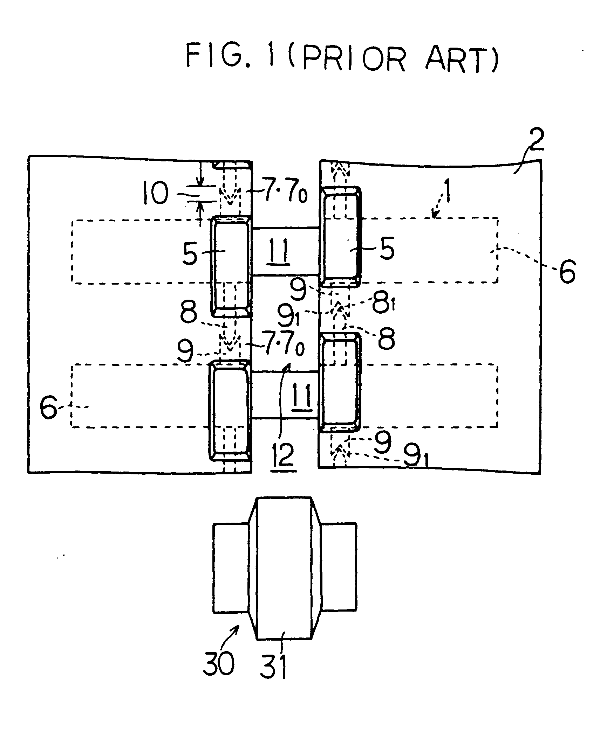

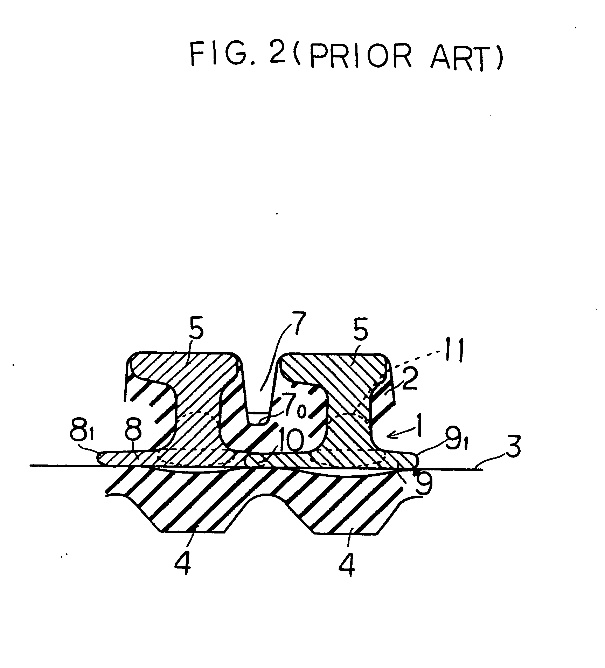

To avoid such displacement of the cores in the rubber crawler track, the structure of rubber crawler track shown in FIGS. 1 and 2 was proposed. This prior-art rubber crawler track structure is such that cores 1 have the wings 6 thereof buried in a rubber belt 2 and steel-cord rows 3 are buried in the rubber belt 2 under the wings 6 (on the side thereof facing the ground). Also, a plurality of lugs 4 is formed on the outer circumference the rubber belt 2. Each core 1 has two projections 5 in pair extending inwardly of the rubber belt 2 from the core 1. These projections 5 extend from the core 1 in opposite directions longitudinally of the rubber belt 2. More particularly, the right one of the projections 5 on the plane of FIG. 1 extends upward from the wing 6 on the plane of FIG. 1 while the left one extends downward from the wing 6. The rubber belt 2 between the two successive projections 5 of the cores 1 adjacent to each other is removed previously to form a concavity 7 between the projections 5. A roller or idler 30 will roll over these projections 5. The roller 30, for example, has formed thereon a flange 31 which will roll between the projections 5 to prevent the core 1 from being displaced laterally of the rubber crawler track, which contributes to prevent the rubber crawler track from being disengaged from the track rollers.

For this feature of lateral-displacement prevention in this prior-art rubber crawler track, each of the projections 5 has extensions 8 and 9 from the opposite bottom ends thereof. The extension 8 has a tapered end 8₁ while the extension 9 has a bifurcated end 9₁. The tapered end 8₁ of the extension 8 of one of the two successive projections 5 is engaged in the bifurcated end 9₁ of the extension 9 of the other projection 5. When an external force or the like is applied laterally to the rubber crawler track, this engagement will provide an interconnection between the neighboring cores 1 to block the cores 1 from being displaced laterally of the rubber crawler track.

However, when this rubber crawler track is wound on a sprocket or the like, it is bent at the concavity 7 and a stress of distortion will concentrate onto the bottom 7₀ of the concavity 7. On the other hand, when a lateral force is applied to the core 1 in the rubber crawler track, a stress of distortion will concentrate onto an engagement 10 between the extensions 8 and 9.

In this prior-art rubber crawler track, since the engagement 10 between the extensions 8 and 9 lies under the bottom 7₀ of the concavity 7 (with no offset between the extensions 8 and 9), all the distortion of the rubber belt 2 will concentrate onto the bottom 7₀ of the concavity 7, which will cause an accelerated deterioration of the rubber belt 2 itself. Especially when the rubber crawler track is bent reversely, the bottom 7₀ of the concavity 7 is likely to be cracked.

In Figures, the reference 11 indicates the central portion of the core 1 on which a sprocket (not shown) will engage, and the reference 12 indicates a hole in which the sprocket is engaged.

The present invention has an object to overcome the above-mentioned drawbacks of the prior art by providing a rubber crawler track designed for the stress not to concentrate onto the bottom of the concavity formed between the projections and configured to have a longer service life.

The present invention provides a rubber crawler track structure comprising an endless rubber belt being the base of the rubber crawler track, cores buried at a predetermined pitch in, and laterally of, the rubber belt, and steel-cord rows buried in the rubber belt and outside the cores, each of the cores having projections in pair extended inwardly out of the rubber belt to prevent disengagement between the rubber crawler track and track rollers and extensions oriented toward the neighboring cores to prevent the cores from being displaced laterally of the rubber crawler track, the extensions seeming to overlap at least partially on each other when viewed in the direction of the rubber crawler track width, characterized in that a concavity is formed between the projections neighboring upon each other longitudinally of the rubber crawler track and that the center of an engagement between the extensions does not coincide with the center of a bottom of the cavity when viewed in the direction of the rubber crawler track width.

If the center of the concavity formed between the projections extended inwardly out of the rubber belt is coincident with that of the engagement between the extensions, the stresses such as compression, drawing, etc. taking place at the time of winding onto the track rollers and idlers will concentrate onto the concavity bottom while various stresses at the ends of the extensions will concentrate onto the engagement between the extensions, that is onto the center of the concavity bottom, so that the rubber belt will be cracked first at the bottom of the concavity.

According to the present invention, however, an offset is provided between the center of the concavity bottom and that of the engagement between the extensions to considerably limit the concentration of the stresses onto the bottom of the concavity, thereby permitting to provide a rubber crawler track having a longer service life. Considering only the concavity bottom, the rubber crawler track is most likely to be distorted at the bottom of the concavity than the remainder of the rubber crawler track. On the other hand, so far as the extensions of the projections are concerned, the rubber crawler track is likely to be distorted in the vicinity of the center of the engagement between the extensions. According to the present invention, the rubber crawler track is so designed as to be distorted at a single or generally single place, namely, the distortion stress created in the rubber belt is dispersed, to provide a rubber crawler track of which the service life is longer.

The present invention will be further described, by way of example, with reference to the accompanying drawings:
FIG. 1 is a plan view of the inner circumference of a prior-art rubber crawler track;
FIG. 2 is a sectional view of the projections of the prior-art rubber crawler track;
FIG. 3 is a plan view of the inner circumference of a rubber crawler track according a first embodiment of the present invention;
FIG. 4 is a sectional view of the projections of the rubber crawler track in FIG. 3;
FIG. 5 is a plan view of the inner circumference of a rubber crawler track according to a second embodiment of the present invention, showing only the cores; and
FIG. 6 is a sectional view of the cores in a rubber crawler track according to the present invention and which was used in the experiments.

According to the present invention, the center of the bottom 7₀ of the concavity 7 is displaced (by an offset C) from that of the engagement 10 of the extensions 8 and 9 on each other to prevent the distortion stress created in the rubber belt from concentrating onto the bottom 7₀ of the concavity 7.

In the prior art shown in FIGS. 1 and 2, the extensions 8 and 9, for example, are adjusted in length to displace the center of the engagement 10 from the center of the bottom 7₀ of the concavity 7, thereby inhibiting the acceleration of the rubber at this place and thus providing a rubber crawler track having a longer service life.

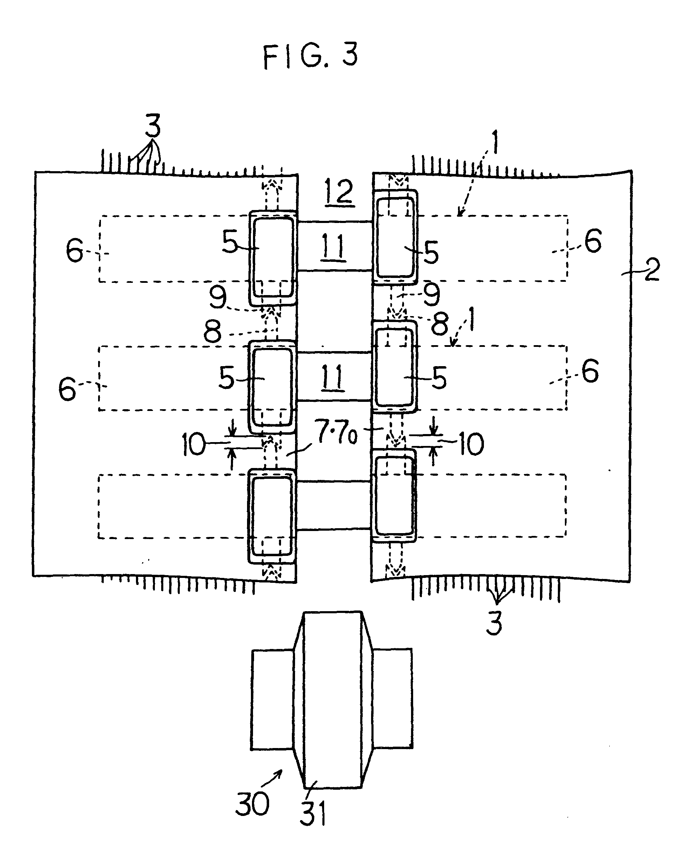

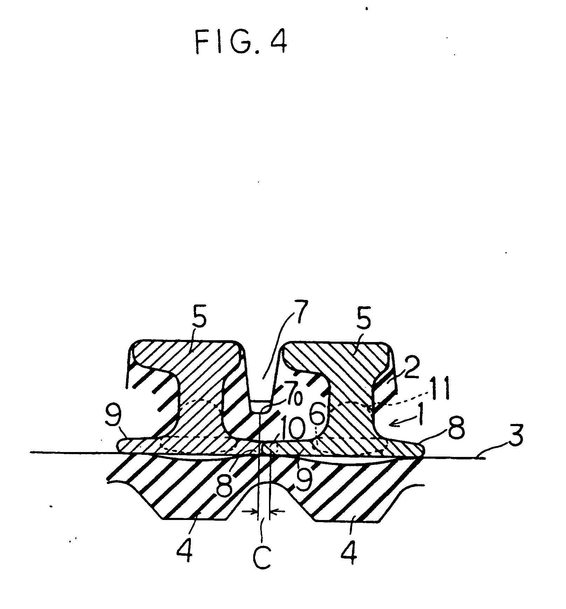

FIG. 3 is a plan view of the inner circumference of the first embodiment of the improved rubber crawler track according to the present invention. FIG. 4 is a sectional view of the projections 5. In the first embodiment, each of the projections 5 has extensions 8 and 9 formed at the bottom thereof as in FIGS. 1 and 2. The extensions 8 and 9 are engaged on each other to prevent the core 1 from being laterally displaced. However, the extensions 8 and 9 in the rubber crawler track According to the present invention are different in length from those of the prior-art rubber crawler track. As shown in FIGS. 3 and 4, the center of the engagement 10 between the extensions 8 and 9 is displaced from that of the bottom 7₀ of the concavity 7 (by an offset C). This arrangement allows to disperse the distortion created in the rubber belt 2. Even if the rubber crawler track is bent reversely, the rubber belt 2 is hardly cracked at the bottom 7₀ of the concavity 7.

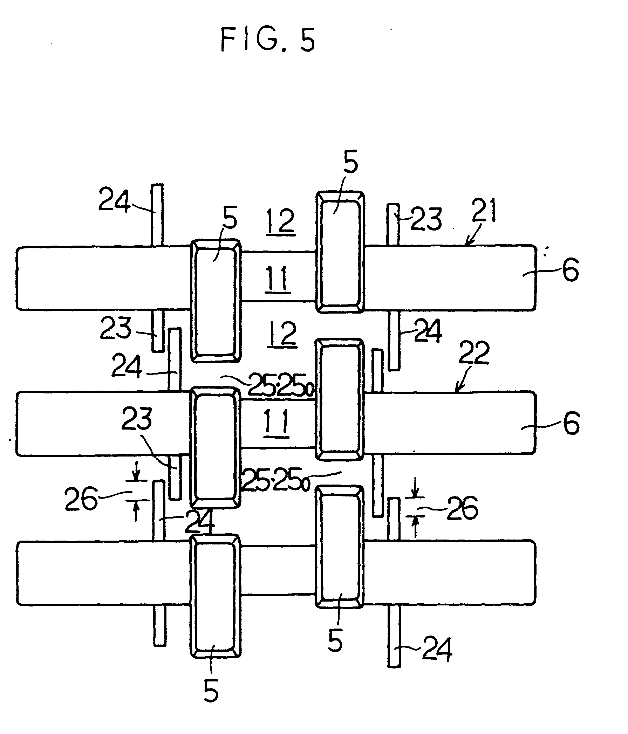

FIG. 5 is a plan view of a rubber crawler track according to the second embodiment of the present invention. Only the cores are shown in this Figure. As shown, the rubber crawler track comprises cores of which two are indicated with the references 21 and 22, respectively, for simplicity of explanation. Each of the cores 21 and 22 has two projections 5 formed thereon in a staggered arrangement in which one of the projections 5 extends along one of the longitudinal directions of the rubber crawler track while the other extends along the other longitudinal direction. Each of the cores 21 and 22 comprises also a central portion 11 and wings 6. Each of the wings 6 has formed therewith bars 23 and 24 in line with each other and along the length of the projections 5. One of the bars, 23, extending from one side of the wing 6 is short while the other 24 extending from the other side is long. The bars of one, 21, for example, of the two successive cores are staggered with respect to those of the other core, 22, for example, as shown in FIG. 5. Also the bars 23 and 24 of one, 21, for example, of the cores seem to overlap on the bars 24 and 23, respectively, of the other core, 22, for example, when viewed in the direction of the rubber crawler track width. This overlapping contributes to the prevention of lateral displacement of the cores 21 and 22.

As shown, there is defined a concavity 25 between the ends of the two successive projections 5, lying in a line, of the two successive cores 21 and 22. The concavity 25 has a bottom 25₀. The center of the overlapping 26 of the bars 23 and 24 on each other is off the concavity bottom 25₀ (by an offset C), whereby the distortion stress created in the rubber belt will be inhibited from concentrating upon the concavity bottom 25₀. Thus, the present invention provides a rubber crawler track having a longer service life.

The results of experiments made on the rubber crawler track according to the present invention will be given below to show the advantage of the present invention.

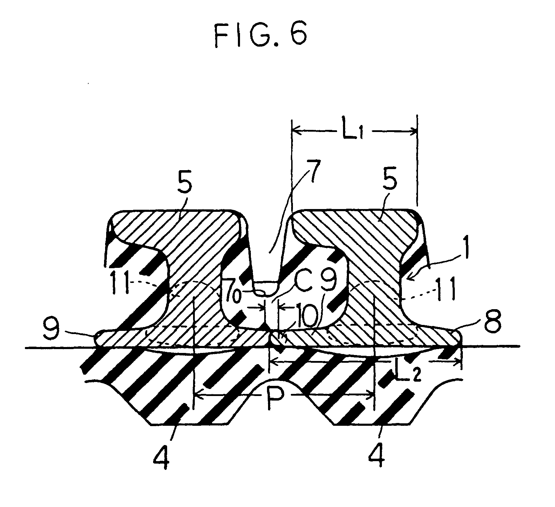

FIG. 6 is a sectional view, enlarged in scale, of the core 1 of the rubber crawler track subjected to the experiments. The rubber crawler track is 400 mm wide, the pitch P between the cores 1 is 64 mm, the top L₁ of the projections 5 is 52 mm long, the total length of the extensions 8 and 9 is 83 mm, the spacing between the projections 5, one belonging to one of the cores 21, for example, and the other belonging to the other core 22, for example, and the depth of the concavity 7 between these projections 5 is 5 mm from the upper surface of the wings 6. The offset C between the center of the concavity 7 and the center of the engagement between the extensions 8 and 9 is made to be 6 mm by adjusting the length of the extensions 8 and 9. Also, in a prior-art rubber crawler track used in the experiments, the offset thereof is 0 mm and the center of the concavity 7 is coincident with that of the engagement between the extensions 8 and 9.

The experiments were done on an artificial ground made of round stones and sand and having an irregular surface. Each of the test rubber crawler tracks was attached to a construction machine weighing 5 tons. The construction machine was driven continuously over the test location. The round stones in the test ground were so arranged that the rubber crawler track was bent reversely through a maximum angle of 125°.

As the experiment results, the rubber crawler track according to the present invention did not incur any crack deep to the cores even after the construction machine was driven for 50 hours. However, cracks deep to the extensions 8 and 9 of the cores were found in the bottoms 7₀ of the concavities 7 of the prior-art rubber crawler track after driving the construction machine for 10 hours. Thus, the experiment results proved the effect of present invention for suppressing such cracking as well as the considerably improved durability of the rubber crawler track according to the present invention.

## Claims

1. A rubber crawler track structure, comprising an endless rubber belt being the base of the rubber crawler track, cores (1) buried at a predetermined pitch in, and laterally of, the rubber belt (2), and steel-cord rows (3) buried in the rubber belt (2) and outside the cores (1), each of the cores (1) having projections (5) in pair extended inwardly out of the rubber belt (2) to prevent disengagement between the rubber crawler track and track rollers and extensions (8,9) oriented toward the neighboring cores (1) to prevent the cores from being displaced laterally of the rubber crawler track, the extensions seeming to overlap at least partially on each other when viewed in the direction of the rubber crawler track width, **characterized in that** a concavity (7) is formed between the projections (5) neighboring upon each other longitudinally of the rubber crawler track and the center of an engagement (10) between the extensions (8,9) does not coincide with the center of a bottom (70) of the concavity (7) when viewed in the direction of the rubber crawler track width.

## Patentansprüche

1. Gummiraupenkettenstruktur, aufweisend einen endlosen Gummiriemen, der die Basis der Gummiraupenkette ist, Kerne (1), die bei einer vorgegebenen Teilungslänge seitlich von dem Gummiriemen (2) in den Gummiriemen (2) eingebettet sind, und Stahlcordreihen (3), die außerhalb der Kerne (1) in den Gummiriemen (2) eingebettet sind, wobei jeder der Kerne (1) Vorsprünge (5) hat, die sich paarweise aus dem Gummiriemen (2) nach innen erstrecken, um eine Trennung zwischen der Gummiraupenkette und den Laufrollen zu verhindern, und Verlängerungen (8, 9) hat, die zu den benachbarten Kernen (1) hin orientiert sind, um zu verhindern, daß die Kerne seitlich zu der Gummiraupenkette versetzt werden, wobei bei Betrachtung in der Richtung der Gummiraupenkettenbreite die Verlängerungen sich zumindest teilweise zu überlappen scheinen, **dadurch gekennzeichnet, daß** eine Rundhöhlung (7) zwischen den in der Längsrichtung der Gummiraupenkette einander benachbarten Vorsprüngen (5) gebildet ist, und bei Betrachtung in der Richtung der Gummiraupenkettenbreite die Mitte des Eingriffs (10) zwischen den Verlängerungen (8, 9) nicht mit der Mitte des Bodens (70) der Rundhöhlung (7) zusammenfällt.

## Revendications

1. Structure de chenille en caoutchouc comprenant une courroie sans fin en caoutchouc constituant la base de la chenille en caoutchouc, des noyaux (1) noyés à un espacement prédéterminé dans la courroie en caoutchouc (2) et latéralement par rapport à celle-ci, et des rangées de câblés en acier (3) noyés dans la courroie en caoutchouc (2) et en-dehors des noyaux (1), chacun des noyaux (1) comportant des saillies (5) s'étendant par paires vers l'intérieur et hors de la courroie en caoutchouc (2) pour empêcher un dégagement entre la chenille en caoutchouc et les galets de la chenille, et des extensions (8, 9) orientées vers les noyaux avoisinants (1) pour empêcher un déplacement latéral des noyaux par rapport à la chenille en caoutchouc, les extensions semblant se chevaucher au moins partiellement, vues dans la direction de la largeur de la chenille en caoutchouc, **caractérisée en ce qu'**une concavité (7) est formée entre les saillies (5) agencées de manière adjacente dans le sens longitudinal de la chenille en caoutchouc et **en ce que** le centre d'engagement (10) entre les extensions (8, 9) ne coïncide pas avec le centre d'un fond (70) de la concavité (7), vu dans la direction de la largeur de la chenille en caoutchouc.
